# DEMANDE DE BREVET EUROPEEN

(11) **EP 4 681 844 A1**
(43) Date de publication de la demande: **21.01.2026**
(21) Numéro de dépôt: 24189356.9
(22) Date de dépôt: 18.07.2024
(51) Int. Cl.: B22F 3/10, B22F 10/10, C22C 1/04, B22F 10/14, B22F 10/18, C22C 5/02, C22C 5/06, C22C 5/08, C22C 5/04, G04B 37/22, B33Y 40/20, A44C 27/00

(54) **PROCÉDÉ DE FABRICATION D'UN ÉLÉMENT EN ALLIAGE DE MÉTAL PRÉCIEUX D'UNE PIÈCE DE JOAILLERIE OU D'HORLOGERIE**

(71) Demandeur: Richemont International SA, 1752 Villars-sur-Glâne (CH)
(72) Inventeur: GIRAUD, Damien, 90100 Joncherey (FR); MICHEL, Jean-François, 25620 TREPOT (FR); BLAHUTA, Samuel, 25000 BESANCON (FR); BROIZAT, Manon, 2502 BIENNE (CH)
(74) Mandataire: Ipsilon

(57) **Abrégé**

(a) mise en forme et agglomération d'une composition solide comprenant une poudre métallique et optionnellement un liant organique,
la poudre métallique étant constituée de particules d'un alliage choisi dans le groupe constitué des alliages suivants :
* alliages d'or contenant au moins 583 %o en poids d'or,
* alliages d'argent contenant au moins 750 %o en poids d'argent,
* alliages de platine contenant au moins 850 %o en poids de platine,

la mise en forme du mélange formant un agglomérat de particules métalliques,

(b) formation d'un élément en métal par frittage de l'agglomérat de particules métalliques sur un support, à une température de frittage T_{fri},
le support ayant un coefficient d'évolution thermique ΔV1,
l'agglomérat de particules métalliques ayant un coefficient d'évolution thermique ΔV2,
avec 0,5*|ΔV2| ≤ |ΔV1| ≤ 1,5*|ΔV2| sur une gamme de température comprise entre
* T_{fri}-200°C et T_{fri} pour les alliages d'or ou d'argent,
* T_{fri}-400°C et T_{fri} pour les alliages de platine,
le support et l'agglomérat de particules métalliques étant constitués de matériaux différents.

## Description

### DOMAINE DE L'INVENTION

La présente invention concerne un procédé de fabrication d'un élément en alliage de métal. L'élément résultant de ce procédé est destiné à être utilisé dans l'industrie du luxe, par exemple en tant que pièce de joaillerie ou d'horlogerie.

### ÉTAT ANTERIEUR DE LA TECHNIQUE

La fabrication d'objets à base d'alliage de métaux précieux tels que l'or, l'argent ou le platine peut être réalisée de diverses manières. Par exemple, les objets peuvent être formés par moulage à partir de l'alliage fondu ou par fabrication additive à partir de particules métalliques. Les alternatives à la formation par moulage incluent également le corroyage (laminage, cycles thermiques), le découpage et l'usinage.

Certains procédés impliquent la formation de pièces intermédiaires (agglomérat de particules) appelées pièce verte (green body) et pièce marron (brown body), ainsi qu'une étape de frittage, selon les étapes suivantes :
- formation d'une pièce verte à partir de particules métalliques et, par exemple, d'un liant,
- formation d'une pièce marron par traitement thermique (déliantage) de la pièce verte,
- frittage de la pièce marron.

Lors de l'étape de frittage, le retrait de l'agglomérat de particules entraîne une perte de 10 % à 20 % de son volume. Le retrait est idéalement homothétique, mais le frottement de la pièce contre la sole du four dans lequel est réalisé le frittage, entrave le retrait. Il en résulte une pièce dont la partie qui n'est pas en contact avec le four subit un retrait plus important que sa partie inférieure. La pièce présente, en conséquence, des propriétés hétérogènes.

Pour pallier cet inconvénient, on positionne l'agglomérat de particules (pièce verte ou marron) sur un support de frittage, à l'interface entre la partie inférieure de la pièce et la sole du four.

Le support permet ainsi d'obtenir un retrait homothétique et maîtrisé.

Les supports de frittage actuellement utilisés sont réalisés dans la même matière que celle de la pièce à fritter, afin que leur déformation ait lieu à même vitesse au cours du frittage.

Le document US 2022/0274177 décrit une méthode de frittage d'une pièce verte positionnée sur un support pouvant être réalisé dans les mêmes matériaux que la pièce verte.

Le document EP 4 086 711 décrit un support de frittage pour la réalisation d'une pièce d'horlogerie, présentant une géométrie configurée pour soutenir la pièce verte.

Dans les domaines de la joaillerie et de l'horlogerie, les pièces sont généralement fabriquées en métaux précieux. Utiliser un support dans la même matière que celle de la pièce à fritter conduit à un coût de fabrication élevé. En outre, le recyclage de ces métaux formant le support est onéreux et contraignant. Enfin, cela mobilise une grande quantité de métaux précieux.

Il est donc nécessaire de développer des supports en matériaux différents de ceux utilisés pour la réalisation des pièces à fritter, pour réduire les dépenses liées à la fabrication de l'élément en métal.

Certains matériaux inertes ont été utilisés. Ils présentent souvent des températures de fusion élevées par rapport à celles de certains métaux précieux, notamment les alliages d'or. Ainsi, ils ne sont pas adaptés à l'obtention d'un retrait simultané à celui de la pièce à fabriquer.

Par conséquent, il est essentiel de mettre en oeuvre un support ayant une déformation adaptée à celle de l'élément à fritter, en particulier à la température frittage.

La présente invention propose de pallier les inconvénients de l'état de la technique à l'aide d'un support réalisé en matériau non précieux, ayant un coefficient d'évolution thermique, aux alentours de la température de frittage, proche de celui de la pièce à fritter.

### EXPOSE DE L'INVENTION

Le Demandeur a mis au point un procédé de fabrication d'un élément en métal, d'une pièce de joaillerie ou d'horlogerie. Au cours du procédé, une pièce à fritter est positionnée sur un support permettant un retrait homogène à celui de la pièce.

Plus précisément, la présente invention concerne un procédé de fabrication d'un élément en métal, d'une pièce de joaillerie ou d'horlogerie, comprenant les étapes suivantes :
(a) mise en forme et agglomération d'une composition solide comprenant une poudre métallique et optionnellement un liant organique,
   la poudre métallique étant constituée de particules d'un alliage choisi dans le groupe constitué
   des alliages suivants :
      * alliages d'or contenant au moins 583 %o en poids d'or,
      * alliages d'argent contenant au moins 750 %o en poids d'argent,
      * alliages de platine contenant au moins 850 %o en poids de platine,
      la mise en forme du mélange formant un agglomérat de particules métalliques,
(b) formation d'un élément en métal par frittage de l'agglomérat de particules métalliques sur un support, à une température de frittage T_{fri},
   le support ayant un coefficient d'évolution thermique ΔV1,
   l'agglomérat de particules métalliques ayant un coefficient d'évolution thermique ΔV2,
   avec 0,5*|ΔV2| ≤ |ΔV1| ≤ 1,5*|ΔV2| sur une gamme de température comprise entre
   * T_{fri}-200°C et T_{fri} pour les alliages d'or ou d'argent,
   * T_{fri}-400°C et T_{fri} pour les alliages de platine,
   le support et l'agglomérat de particules métalliques étant constitués de matériaux différents.

Le coefficient d'évolution thermique correspond au coefficient de retrait thermique lorsque les dimensions de la pièce diminuent alors que la température augmente ou au coefficient de dilatation thermique lorsque les dimensions de la pièce augmentent alors que la température augmente. Ainsi, la valeur absolue |ΔV1| indique l'évolution (retrait et/ou dilatation) du support sur une gamme de température dépendant de la nature de l'alliage.

Selon un mode de réalisation particulier, le procédé de fabrication peut comprendre des étapes intermédiaires ou supplémentaires. Il peut notamment s'agir d'une étape d'usinage et/ou de meulage et/ou d'autres potentielles finitions de surface sur l'agglomérat de particules ou sur l'élément en métal.

De manière générale, le procédé de fabrication n'inclut pas l'usinage et/ou la finition pouvant être réalisés sur l'élément en métal résultant de l'étape (b). L'usinage et la finition de l'élément en métal constituent des étapes post-fabrication.

### Alliage

De manière avantageuse, la poudre métallique de l'étape (a) est constituée de particules d'un alliage choisi dans le groupe constitué de : alliages d'or comprenant de l'argent et du cuivre ; alliages d'or comprenant du palladium et du cuivre ; alliages d'or comprenant du cuivre ; alliages d'or comprenant du palladium, de l'argent et du cuivre ; alliages d'or comprenant du platine ; alliages d'or comprenant de l'argent et du fer ; alliages d'or comprenant de l'argent, du cuivre et du platine ; alliages d'or comprenant du titane ; alliages d'or comprenant du hafnium ; alliages d'or comprenant du niobium ; alliages d'or comprenant du chrome ; alliages d'or comprenant du tantale ; alliages d'argent comprenant du cuivre ; alliages de platine comprenant du cuivre ; alliages de platine comprenant du cuivre et du gallium ; alliages de platine comprenant de l'or; alliages de platine comprenant du titane ; alliages de platine comprenant du cobalt et alliages de platine comprenant du ruthénium.

Les alliages d'or peuvent comprendre des éléments additionnels (affineur de grain...), par exemple au moins élément choisi parmi : titane, hafnium, niobium, chrome, iridium, zirconium et tantale.

Lorsque l'alliage est à base d'or (au moins 583 ‰, soit au moins 14 carats), il comprend avantageusement au moins 750 ‰ d'or (18 carats), par exemple au moins 917 ‰ d'or (22 carats). Il peut notamment s'agir d'or j aune, d'or gris, d'or rose ou d'or rouge.

L'alliage à base d'or est avantageusement choisi dans le groupe constitué de : Au₅₈₅Ag₃₂₀Cu₉₅ ; Au₅₈₅Ag₂₆₅Cu₁₅₀ ; Au₇₅₀Ag₁₆₀Cu₉₀ ; Au₇₅₀Ag₁₂₅Cu₁₂₅ ; Au₇₅₃Ag_{123,5}Cu_{123,5} ; Au₇₅₀Ag₉₀Cu₁₆₀ ; Au₇₅₀Ag₄₅Cu₂₀₅ ; Au₇₅₃Ag₄₄Cu₂₀₃ ; Au₇₅₃Ag_{43,5}Cu_{203,5} ; Au₇₅₁Pd₆₀Cu₁₈₉ ; Au₇₅₀Ag₃₀Pd₁₂₅Cu₉₅ ; Au₇₅₀Ag₅Pd₁₂₅Cu₁₀₀In₂₀ ; Au₇₅₃Ag₃₀Pd₁₂₅Cu₉₂ ; Au₇₅₀Pd₁₃₀Cu₁₀₀In₂₀ ; Au₇₅₀Pd₁₅₀Cu₄₀Fe₆₀ ; Au₇₅₃Pd₁₅₀Cu₃₉Fe₅₈ ; Au₇₅₀Ag₃₅Cu₂₁₅ ; Au₉₁₇Ag₂₁Cu₆₂ ; Au₉₁₇Cu₈₃ ; et Au₉₁₇Ag₅₅Cu₂₈.

Lorsque l'alliage est à base d'argent, il comprend avantageusement au moins 900 ‰ d'argent, plus avantageusement au moins 925 %o d'argent, par exemple Ag₉₂₈Cu₇₂ ou Ag₉₂₅Cu₇₅.

Lorsque l'alliage est à base de platine, il comprend avantageusement au moins 930 %o de platine, par exemple 953 %o de platine. Dans ce cas, il est avantageusement choisi dans le groupe constitué de : Pt₉₅₀Cu_{7,5}Ga_{42,5} ; Pt₉₅₃Cu₁₇Ga₃₀ ; Pt₉₇₅Cu_{12,5}Ga_{12,5} ; Pt_{964,5}Cu_{28,2}Ga_{7,3} ; Pt_{938,3}Cu_{42,7}Ga₁₉ ; Pt₉₅₃Cu₄₇; et Pt₉₅₀Ru₅₀. Il peut également s'agir d'un alliage de platine comprenant au moins : 950 %o de platine et 20 à 30 %o d'or.

Les particules de la poudre métallique de l'étape (a) présentent une granulométrie avantageusement comprise entre 0,3 et 100 µm, plus avantageusement entre 1 et 100 µm, plus avantageusement entre 1 et 50 µm.

La granulométrie correspond à la taille moyenne en volume des particules, par exemple le diamètre moyen lorsque les particules ont une forme sphérique.

La granulométrie peut être mesurée avec tout type d'instrument conventionnel, par exemple par diffraction laser (à titre d'exemple un instrument de type Mastersizer^{®} de la société Malvern Panalytical). Ainsi, et quelle que soit la forme d'une particule, la granulométrie correspond au diamètre de la sphère équivalente diffractant de la même manière que la particule.

### Liant

La composition solide de l'étape (a) comprend optionnellement un liant organique.

La présence de liant organique améliore la formation de l'agglomérat de particules métalliques en apportant plus de cohésion mécanique entre les particules métalliques.

Ce liant peut être optionnellement éliminé lors d'une éventuelle étape de déliantage précédant le frittage de l'étape (b).

Le liant est avantageusement un liant organique polymérique.

Le liant est préférentiellement choisi dans le groupe constitué de : polymères d'acide acrylique ; polyéthylène glycol ; cellulose acétate butyrate ; nano-cellulose ; amidon de maïs ; sucre ; acide polylactique ; polyéthylène ; polypropylène ; cire synthétique ; cire naturelle ; acide stéarique ; et leurs mélanges.

Le liant peut notamment être l'un des liants Aquafuse^{®} ou Cleanfuse^{®} commercialisés par la société ExOne (Desktop Métal), ou l'un des liants C20 ou DM925 commercialisés par la société Digital Métal.

De manière générale, le liant organique est éliminé lors du chauffage de l'agglomérat de particules métalliques, de préférence lorsqu'une température de 400 à 650°C est atteinte. Ainsi, la présence de liant organique n'influence pas le comportement de l'agglomérat de particules métalliques et son évolution thermique (retrait et/ou dilatation) à une température comprise (i) entre T_{fri}-200°C et T_{fri} pour les alliages d'or ou d'argent ou (ii) entre T_{fri}-400°C et T_{fri} pour les alliages de platine.

### Support

Le support sur lequel repose l'agglomérat de particules métalliques présente un coefficient d'évolution thermique ΔV1, dont la valeur absolue |ΔV1| correspond à 0,5*|ΔV2| ≤ |ΔV1| ≤ 1,5*|ΔV2| sur une gamme de température comprise entre
* T_{fri}-200°C et T_{fri} pour les alliages d'or ou d'argent,
* T_{fri}-400°C et T_{fri} pour les alliages de platine,
où |ΔV2| est la valeur absolue du coefficient d'évolution thermique ΔV2 à la température de frittage, T_{fri}, de l'agglomérat de particules métalliques.

Avantageusement, le coefficient d'évolution thermique ΔV1 correspond à 0,8*|ΔV2| ≤ |ΔV1| ≤ 1,2*|ΔV2| sur une gamme de température comprise entre
* T_{fri}-200°C et T_{fri} pour les alliages d'or ou d'argent,
* T_{fri}-400°C et T_{fri} pour les alliages de platine.

Le coefficient d'évolution thermique mesure la diminution relative d'au moins une dimension, par exemple du volume, d'un objet (agglomérat de particules métalliques ou support) lorsque la température varie. Comme déjà indiqué, il peut s'agir de la dilatation ou de la rétractation (retrait) de l'objet sous l'effet de la température. Pour ce faire, on utilise préférentiellement un dilatomètre.

Le support est avantageusement constitué d'un matériau choisi dans le groupe constitué de : cuivre ; alliages comprenant du cuivre et de l'étain ; alliages comprenant du cuivre, du nickel et de l'étain ; alliages comprenant du cuivre et de l'aluminium ; aciers ; alliages de titane ; superalliages ; carbures ; nitrures ; cermets ; alliages à mémoire de forme ; géopolymères ; et matériaux céramiques.

Parmi les matériaux céramiques, on peut citer par exemple, les argiles (bentonite, kaolinite, illite, ball clay, chamotte), les minéraux de type feldspath, la porcelaine (par exemple la porcelaine à la cendre d'os), l'émail, et les frittes de verre.

De manière avantageuse, le support est constitué d'un matériau choisi dans le groupe constitué de : CuSn₈ ; CuSn₁₀ ; CuSn₁₅ ; CuNi₉Sn₆, par exemple de la marque Niclafor^{®} ; CuNi₁₅Sn₈, par exemple de la marque Pfinodal^{®} ; CuAl ; SiO₂ ; Al₂O₃ ; ZrO₂ ; faïence ; et porcelaine.

Le support peut également être constitué de matériaux choisis dans le groupe constitué de : acier 316L ; acier 17-4PH ; acier à outils ; TiAl et TiAl₆V₄ ; notamment dans le cas d'un agglomérat de particules métalliques en alliage d'or à haut point de fusion (température de fusion avantageusement supérieure à 1300°C) ou de platine à haut point de fusion (température de fusion avantageusement supérieure à 1400°C).

Avantageusement, le support est en alliage de cuivre lorsque la poudre métallique est constituée de particules d'un alliage d'argent.

Avantageusement, le support est en alliage de cuivre lorsque la poudre métallique est constituée de particules d'un alliage de platine.

Le support peut être partiellement densifié ou complètement densifié préalablement à l'étape (b). S'il est partiellement densifié, sa densification peut être continuée, voire optionnellement achevée, en même temps que celle de l'élément en métal.

Le support peut être conçu à l'aide d'outils de simulation numérique pour ajuster sa densité et sa morphologie, et ainsi adapter son coefficient d'évolution thermique.

Par exemple, le support peut être réalisé au moyen d'une des techniques suivantes :
- l'usinage de céramique,
- le pressage, notamment de céramique non frittée,
- la fabrication additive métallique (MIM),
- la fabrication additive par extrusion d'un mélange de poudre métallique et de liant, par exemple le dépôt fil fondu (FDM ou FFF),
- la projection de liant ou le j et de liant (binder j etting),
- la fabrication additive par MoldJet^{®},
- le gel casting,
- la lithographie, avantageusement la stéréolithographie ou la DLP (Direct Light Processing),
- l'impression tridimensionnelle au moyen d'une encre, par exemple le NanoParticle Jetting^{®} de la société XJET technology, ou
- la sérigraphie.

L'homme du métier saura sélectionner les techniques appropriées pour obtenir un support selon l'invention.

En pratique, le support peut être de forme circulaire, elliptique, parallélépipédique, plat, ou encore creux ou bombé. Il peut avoir une forme complémentaire à celle de l'agglomérat de particules métalliques.

Selon un mode de réalisation, le support est usiné avant utilisation.

L'agglomérat de particules métalliques est avantageusement positionné sur le support et peut être positionné avant la réalisation de l'étape (b).

### Étape (a)

L'étape (a) met en oeuvre une composition comprenant (avantageusement constituée de) une poudre métallique et optionnellement un liant.

Tout procédé permettant de former la composition entre la poudre métallique et optionnellement le liant peut être utilisé.

Cette composition peut être préparée avant la mise en forme engendrant la formation de l'agglomérat de particules métalliques, par mise en contact entre la poudre métallique et optionnellement le liant. Il peut s'agir de la formation d'un mélange par dépôt de liant, sous la forme de fil fondu, sur les particules métalliques, mais aussi de la formation d'un mélange de liant sous forme solide (par exemple sous la forme de granules ou de poudre), et de la poudre métallique. Selon un autre mode de réalisation, cette composition peut se présenter sous la forme d'un slurry, par exemple une pâte plus ou moins visqueuse.

Cette composition peut également être préparée pendant la mise en forme engendrant la formation de l'agglomérat de particules métalliques, par exemple dans un procédé de fabrication additive de l'élément en métal.

Un mode de réalisation particulier concerne la fabrication additive par projection de liant sur la poudre métallique : dépôt du liant sur une fine couche de poudre métallique, couche par couche.

La mise en forme (bidimensionnelle ou tridimensionnelle) de l'agglomérat de particules métalliques de l'étape (a), est avantageusement réalisée dans un dispositif de fabrication additive ou dans un moule.

La mise en forme dans un dispositif de fabrication additive est progressive car elle est réalisée couche après couche, au fur et à mesure de la formation de l'agglomérat de particules métalliques.

La mise en forme peut notamment être réalisée dans le cadre d'une des technologies suivantes :
- la projection de liant ou le j et de liant (binder j etting),
- la fabrication additive par MoldJet^{®},
- le gel casting,
- la fabrication additive métallique (MIM « métal injection molding »),
- la fabrication additive par extrusion d'un mélange de poudre métallique et de liant, par exemple le dépôt fil fondu (FDM « Fused Déposition Modelling » ou FFF « Fused Filament Fabrication »), et
- la lithographie.

La mise en forme est avantageusement réalisée à une température comprise entre 20 et 300°C, plus avantageusement entre 50 et 150°C. Par exemple, la mise en forme peut être réalisée à la température ambiante (en général entre 20 et 25°C).

La présence d'un liant organique peut faciliter la manipulation de l'agglomérat de particules métalliques en améliorant ses propriétés mécaniques. En fonction de la nature du liant et/ou de la manière dont il est mis en contact avec la poudre métallique, le procédé peut comprendre une étape de réticulation du liant. C'est notamment le cas lorsque le liant et la poudre métallique forment un mélange pulvérulent.

Le procédé peut comprendre, notamment dans le cas de la fabrication additive par MoldJet^{®}, les étapes suivantes : refroidissement, séchage et évaporation du solvant lors de la dépose de pâte métallique.

L'agglomérat de particules métalliques présente des propriétés mécaniques et de dureté permettant de le manipuler.

Comme déjà indiqué, la mise en forme du mélange permet de générer l'agglomérat de particules métalliques.

### Étape (a')

Avantageusement, le procédé comprend une étape (a'), consistant à traiter thermiquement et/ou chimiquement l'agglomérat de particules métalliques avant l'étape (b).

Lorsqu'un liant a été mélangé à la poudre métallique lors de l'étape (a), ce traitement thermique et/ou chimique est un déliantage qui permet d'éliminer le liant.

Le procédé peut comprendre une étape de réticulation du liant, préalablement à l'étape (a'), avantageusement par voie thermique. Cette étape permet de faciliter la manipulation de l'agglomérat de particules métalliques.

Comme déjà indiqué, le déliantage peut être réalisé par voie thermique ou par voie chimique (par exemple au moyen d'un solvant solubilisant le liant).

Le traitement thermique (déliantage si un liant est utilisé) est avantageusement réalisé pendant 20 à 720 minutes, plus avantageusement 120 à 360 minutes. Il peut être réalisé sous oxygène.

Selon un mode de réalisation préféré, le traitement thermique (déliantage si un liant est utilisé) est réalisé à une température comprise entre 300 et 800°C, plus avantageusement 500 à 700°C. L'homme du métier adaptera la température en fonction de la nature de la poudre métallique.

Le traitement thermique peut être réalisé dans un four exposé à l'air.

Le traitement thermique est avantageusement réalisé selon la séquence suivante :
- placer l'agglomérat de particules métalliques en présence d'oxygène, par exemple dans un four sous air, à la température T1 (en général entre 18 et 25°C),
- augmentation de la température T1 jusqu'à atteindre une température T2 comprise entre 200 et 500°C (avantageusement 400°C), préférentiellement en suivant une montée en température de 0.5 à 20°C/minute, avantageusement de 1 à 5°C/min, par exemple de 2°C/min,
- optionnellement, maintien de l'agglomérat de particules métalliques à la température T2 avantageusement pendant 10 à 240 minutes, plus avantageusement pendant 30 à 120 minutes, par exemple 60 minutes,
- le cas échéant, augmentation de la température T2 jusqu'à atteindre une température T3 comprise entre 300 et 800°C (avantageusement 500 à 650°C), préférentiellement en suivant une montée en température de 0.5 à 20°C/minute, avantageusement de 1 à 5°C/min, par exemple de 2°C/min,
- maintien de l'agglomérat de particules métalliques à une température comprise entre 300 et 800°C (avantageusement 500 à 650°C), avantageusement pendant 10 à 360 minutes, par exemple 120 minutes.

L'étape optionnelle consistant à maintenir l'agglomérat de particules métalliques à la température T2 peut optimiser le déliantage en libérant progressivement le liant.

Le traitement thermique (déliantage si un liant est utilisé) est avantageusement suivi par le refroidissement de l'agglomérat de particules métalliques, par exemple jusqu'à atteindre la température ambiante (en général entre 18 et 25°C).

Selon un mode de réalisation particulier, le traitement chimique (déliantage si un liant est utilisé) est réalisé à une température d'au moins 20°C, avantageusement au moins 25°C. Ainsi, le traitement chimique peut être associé à un traitement thermique simultané ou ultérieur.

Le déliantage par voie chimique peut être réalisé par mise en contact entre l'agglomérat de particules métalliques et un solvant du liant (réticulé ou non), par exemple un solvant organique. Lorsque la dissolution du liant est partielle, un traitement thermique peut être mis en oeuvre pour optimiser le déliantage.

Dans un mode de réalisation, le déliantage permet d'obtenir une pièce marron dépourvue de liant et présentant des propriétés mécaniques supérieures à celles de l'agglomérat de particules métalliques avant le déliantage.

Cette étape permet donc de diminuer, voire de supprimer, les pertes et les risques de fissuration pouvant résulter de la manipulation de l'agglomérat de particules métalliques avant l'étape (b) de frittage.

De manière générale, l'étape (a') est réalisée à une température inférieure à la température T_{fri}, plus avantageusement comprise entre T_{fri}-200°C et T_{fri} pour les alliages d'or ou d'argent, et entre T_{fri}-400°C et T_{fri}, pour les alliages de platine.

La pièce marron (agglomérat de particules métalliques consolidé et éventuellement délianté) résultant de ce traitement thermique présente des propriétés mécaniques et de dureté permettant de la manipuler et de l'usiner par les méthodes d'usinage conventionnelles, par exemple la CFAO (conception et fabrication assistées par ordinateur), mais aussi la tribofinition ou le meulage.

### Étape (b)

De manière générale, la température de l'étape (b) est supérieure à celles des étapes (a) et (a').

L'étape (b) consiste à former l'élément en métal par frittage de l'agglomérat de particules métalliques (éventuellement sous forme de pièce marron) sur le support.

Le frittage de l'agglomérat de particules métalliques à l'étape (b) peut être réalisé sous atmosphère inerte (avantageusement argon ou azote) ou réductrice.

Il peut être réalisé dans un mélange de gaz réducteur et de gaz inerte.

De manière avantageuse, le frittage de l'étape (b) est réalisé dans un four.

En pratique, le frittage de l'agglomérat de particules métalliques de l'étape (b) est réalisé à une température T_{fri} comprise entre 750°C et 1950°C.

Le frittage est avantageusement réalisé à une température (T_{fri}) comprise entre :
- 750 et 1100°C, plus avantageusement entre 850 et 1060°C, pour les alliages d'or,
- 750 et 1100°C, plus avantageusement entre 850 et 1000°C, pour les alliages d'argent,
- 1100 et 1950°C, plus avantageusement entre 1400 et 1850°C, pour les alliages de platine.

L'agglomérat de particules métalliques est fritté pendant une durée avantageusement comprise entre 20 minutes et 500 minutes, préférentiellement entre 20 minutes et 300 minutes, plus avantageusement entre 30 et 180 minutes.

De manière générale, le frittage permet de durcir l'agglomérat de particules métalliques et donc de le consolider, de le densifier en réduisant (ou éliminant) les pores.

En pratique, l'étape de frittage (b) est celle au cours de laquelle l'agglomérat de particules métalliques subit le retrait le plus important. Il peut perdre entre 15 et 20% de son volume. Le support de l'invention permet d'optimiser l'homogénéité de l'élément en métal obtenu en se comportant de la même manière que l'agglomérat de particules métalliques.

### Étape (c)

Le procédé selon l'invention peut comprendre une étape optionnelle de compaction isostatique (ou CIC) à chaud de l'élément en métal, de préférence après l'étape (b) de frittage.

Cette étape (c) est préférentiellement réalisée dans une presse isostatique comprenant une enceinte pouvant être chauffée et mise sous pression.

Avantageusement, l'étape (c) de compaction isostatique à chaud est réalisée à une température T_{CIC}, correspondant à 50%*Tf ≤ T_{CIC} ≤ 95%*Tf, où T_{f} est la température de fusion des particules d'alliage dont est constituée la poudre métallique de l'étape (a).

La compaction isostatique à chaud est avantageusement réalisée à une température comprise entre 500°C et 1800°C.

Avantageusement, la compaction isostatique à chaud est réalisée à une température comprise entre 1000°C et 1750°C, lorsque la poudre métallique comprend des particules d'un alliage comprenant du platine, et plus spécifiquement entre :
- 1000°C et 1500°C, lorsque l'alliage est constitué de platine et de cuivre ou de platine, de cuivre et de gallium ; ou
- 1250°C et 1750°C, lorsque l'alliage est constitué de platine et de ruthénium.

La compaction isostatique à chaud est avantageusement réalisée sous une pression de gaz inerte (préférentiellement l'azote ou l'argon), de préférence en soumettant l'élément en métal à une pression comprise entre 10⁸ et 2.10⁸ Pa.

De manière avantageuse, l'élément en métal est soumis à la compaction isostatique à chaud pendant une durée comprise entre 20 et 180 minutes, de préférence entre 30 et 70 minutes.

Cette étape permet également d'améliorer les propriétés mécaniques et la dureté de l'élément en métal, notamment en diminuant sa porosité et donc en augmentant sa densité. Avantageusement, après cette étape, l'élément présente une densité supérieure à 99 %, préférentiellement 99,5 %, encore plus préférentiellement 99,9 %.

Cette étape permet en outre d'améliorer l'usinabilité de l'élément.

### Élément en métal issu du procédé de fabrication de l'invention

L'élément en métal issu de l'étape (b) ou (c) peut être utilisé sans traitement supplémentaire. Il peut également être usiné selon les méthodes d'usinage conventionnelles, par exemple le tournage, le fraisage, le perçage, l'alésage, ou selon des méthodes d'usinage laser. Il peut également être soumis à une étape de finition, notamment un polissage.

Le procédé peut inclure une étape (d) d'au moins un post traitement de type tribofinition, sablage, usinage ou pré usinage, etc.

Ainsi, l'élément en métal issu du procédé selon l'invention peut être utilisé dans de nombreux domaines et plus particulièrement, dans l'industrie du luxe.

Aussi, la présente invention concerne également une pièce de joaillerie ou d'horlogerie comprenant l'élément en métal, réalisé selon le procédé de l'invention.

Par article de joaillerie, on désigne les articles de bijouterie (colliers, pendentifs, chaînes, bagues, boucles d'oreilles, bracelets, broches, diadèmes et autres bijoux), mais également les ornements, par exemple les accessoires de mode (boutons de manchette, pinces à billet, pinces à cheveux, épingles, etc.).

Par article d'horlogerie, on désigne notamment les boitiers de montre, les couronnes, les poussoirs, les cadrans, les bracelets métalliques de montres, les fermoirs, les pièces mécaniques d'un mouvement horloger (masse oscillante, balancier, platine, pont, etc.).

### DESCRIPTION DES FIGURES

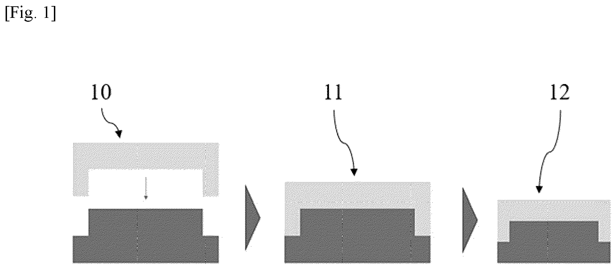

La figure 1 est une représentation de la transformation d'un agglomérat de particules métalliques positionné sur un support, en élément en métal selon un mode de réalisation de l'invention.

### DESCRIPTION DETAILLEE DES FIGURES

En référence à la figure 1, l'ensemble 10 représente un agglomérat de particules métalliques positionné sur un support de frittage. L'agglomérat de particules métalliques est formé d'une poudre métallique constituée de particules d'un alliage d'or (par exemple Au₇₅₃Ag₃₀Pd₁₂₅Cu₉₂), mélangée avec un liant organique polymérique. Le mélange est préalablement mis en forme par fabrication additive métallique.

Le support est constitué de cuivre et réalisé par lithographie, puis usiné de manière à adopter une forme complémentaire à celle de l'agglomérat de particules.

L'ensemble 10 subit un traitement thermique pour éliminer le liant.

À l'issue du déliantage thermique, l'agglomérat de particules est transformé en une pièce marron. L'ensemble 11 illustre la pièce marron obtenue à la suite du traitement thermique, positionnée sur le support.

L'ensemble 11 est ensuite soumis à une étape de frittage dans un four, par exemple sous atmosphère d'argon/hydrogène. Le frittage est réalisé, avantageusement à une température de 950°C pendant 200 minutes. À l'issue de cette étape, la pièce marron subit un retrait se matérialisant par une perte de 15 % à 20 % de volume. Le support présente un retrait homothétique à celui de la pièce marron.

L'ensemble 12 représente l'élément en métal obtenu après frittage, positionné sur le support. L'ensemble 12 présente un volume de 15 à 20% plus faible que celui de l'ensemble 11.

## Revendications

1. Procédé de fabrication d'un élément en métal, d'une pièce de joaillerie ou d'horlogerie, comprenant les étapes suivantes :
(a) mise en forme et agglomération d'une composition solide comprenant une poudre métallique et optionnellement un liant organique,
la poudre métallique étant constituée de particules d'un alliage choisi dans le groupe constitué des alliages suivants :
* alliages d'or contenant au moins 583 %o en poids d'or,
* alliages d'argent contenant au moins 750 %o en poids d'argent,
* alliages de platine contenant au moins 850 %o en poids de platine,
la mise en forme du mélange formant un agglomérat de particules métalliques,
(b) formation d'un élément en métal par frittage de l'agglomérat de particules métalliques sur un support, à une température de frittage T_{fri},
le support ayant un coefficient d'évolution thermique ΔV1,
l'agglomérat de particules métalliques ayant un coefficient d'évolution thermique ΔV2,
avec 0,5*|ΔV2| ≤ |ΔV1| ≤ 1,5*|ΔV2| sur une gamme de température comprise entre
* T_{fri}-200°C et T_{fri} pour les alliages d'or ou d'argent,
* T_{fri}-400°C et T_{fri} pour les alliages de platine,
le support et l'agglomérat de particules métalliques étant constitués de matériaux différents.

2. Procédé selon la revendication 1, ***caractérisé* en ce que** la poudre métallique de l'étape (a) est constituée de particules d'un alliage choisi dans le groupe constitué de : alliages d'or comprenant de l'argent et du cuivre ; alliages d'or comprenant du palladium et du cuivre ; alliages d'or comprenant du cuivre ; alliages d'or comprenant du palladium, de l'argent et du cuivre ; alliages d'or comprenant du platine ; alliages d'or comprenant de l'argent et du fer ; alliages d'or comprenant de l'argent, du cuivre et du platine ; alliages d'or comprenant du titane ; alliages d'or comprenant du hafnium ; alliages d'or comprenant du niobium ; alliages d'or comprenant du chrome ; alliages d'or comprenant du tantale ; alliages d'argent comprenant du cuivre ; alliages de platine comprenant du cuivre ; alliages de platine comprenant du cuivre et du gallium ; alliages de platine comprenant de l'or ; alliages de platine comprenant du titane : alliages de platine comprenant du cobalt et alliages de platine comprenant du ruthénium.

3. Procédé selon la revendication 1 ou 2, ***caractérisé* en ce que** le mélange de l'étape (a) comprend un liant organique choisi dans le groupe constitué de : polymères d'acide acrylique ; polyéthylène glycol ; cellulose acétate butyrate ; nano-cellulose ; amidon de maïs ; sucre ; acide polylactique ; polyéthylène ; polypropylène ; cire synthétique ; cire naturelle ; et acide stéarique et leurs mélanges.

4. Procédé selon l'une des revendications précédentes, ***caractérisé* en ce que** la mise en forme du mélange de l'étape (a) est réalisée dans un dispositif de fabrication additive ou dans un moule.

5. Procédé selon l'une des revendications précédentes, ***caractérisé* en ce que** le support est constitué d'un matériau choisi dans le groupe constitué de : cuivre ; alliages comprenant du cuivre et de l'étain ; alliages comprenant du cuivre, du nickel et de l'étain ; alliages comprenant du cuivre et de l'aluminium ; l'acier ; alliages de titane ; superalliages ; carbures ; nitrures ; cermets ; alliages à mémoire de forme ; géopolymères ; et matériaux céramiques.

6. Procédé selon l'une des revendications précédentes, ***caractérisé* en ce que** le support est constitué d'un matériau choisi dans le groupe constitué de : CuSn₈ ; CuSn₁₀ ; CuSn₁₅ ; CuNi₉Sn₆ ; CuNi₁₅Sn₈ ; CuAl ; SiO₂ ; Al₂O₃ ; ZrO₂ ; faïence ; et porcelaine.

7. Procédé selon l'une des revendications précédentes, ***caractérisé* en ce que** le support est constitué de matériaux choisis dans le groupe constitué de : acier 316L ; acier 17-4PH ; acier à outils ; TiAl et TiAl₆V₄ ; dans le cas d'un agglomérat de particules métalliques en alliage d'or à haut point de fusion ou de platine à haut point de fusion.

8. Procédé selon l'une des revendications précédentes, ***caractérisé* en ce que** le frittage de l'agglomérat de particules métalliques est réalisé à une température T_{fri} comprise entre
* 750 et 1100°C, pour les alliages d'or ou d'argent,
* 1100 et 1950°C, pour les alliages de platine.

9. Procédé selon l'une des revendications précédentes, ***caractérisé* en ce que** le frittage de l'agglomérat de particules métalliques est réalisé sous atmosphère inerte ou réductrice.

10. Procédé selon l'une des revendications précédentes, ***caractérisé* en ce que** le frittage de l'agglomérat de particules métalliques est suivi d'une étape de compaction isostatique à chaud réalisée à une température comprise entre 500 et 1800°C, et **en ce que** le procédé comprend une étape (a'), consistant à traiter thermiquement et/ou chimiquement l'agglomérat de particules métalliques avant l'étape (b).

11. Procédé selon l'une des revendications précédentes, ***caractérisé* en ce que** le support est réalisé au moyen d'une des techniques suivantes :
- l'usinage de céramique,
- le pressage,
- la fabrication additive métallique,
- la fabrication additive par extrusion d'un mélange de poudre métallique et de liant,
- la projection de liant ou le jet de liant,
- la fabrication additive,
- le gel casting,
- la lithographie,
- l'impression tridimensionnelle au moyen d'une encre, ou
- la sérigraphie.

12. Procédé selon l'une des revendications 1 à 5 ou 8 à 11, ***caractérisé* en ce que** le support est en cuivre ou en acier et **en ce que** la poudre métallique est constituée de particules d'un alliage d'or.

13. Procédé selon l'une des revendications 1 à 5 ou 8 à 11, ***caractérisé* en ce que** le support est en alliage de cuivre et **en ce que** la poudre métallique est constituée de particules d'un alliage d'argent.

14. Procédé selon l'une des revendications 1 à 5 ou 8 à 11, ***caractérisé* en ce que** le support est en alliage de cuivre et **en ce que** la poudre métallique est constituée de particules d'un alliage de platine.

15. Procédé selon l'une des revendications 1 à 5 ou 8 à 11, ***caractérisé* en ce que** le support est en cuivre ou en acier et **en ce que** la poudre métallique est constituée de particules d'un alliage d'or choisi dans le groupe constitué de : Au₅₈₅Ag₃₂₀Cu₉₅ ; Au₅₈₅Ag₂₆₅Cu₁₅₀ ; Au₇₅₀Ag₁₆₀Cu₉₀ ; Au₇₅₀Ag₁₂₅Cu₁₂₅ ; Au₇₅₃Ag_{123,5}Cu_{123,5} ; Au₇₅₀Ag₉₀Cu₁₆₀ ; Au₇₅₀Ag₄₅Cu₂₀₅ ; Au₇₅₃Ag₄₄Cu₂₀₃ ; Au₇₅₃Ag_{43,5}Cu_{203,5} ; Au₇₅₁Pd₆₀Cu₁₈₉ ; Au₇₅₀Ag₃₀Pd₁₂₅Cu₉₅ ; Au₇₅₀Ag₅Pd₁₂₅Cu₁₀₀In₂₀ ; Au₇₅₃Ag₃₀Pd₁₂₅Cu₉₂ ; Au₇₅₀Pd₁₃₀Cu₁₀₀In₂₀ ; Au₇₅₀Pd₁₅₀Cu₄₀Fe₆₀ ; Au₇₅₃Pd₁₅₀Cu₃₉Fe₅₈ ; Au₇₅₀Ag₃₅Cu₂₁₅ ; Au₉₁₇Ag₂₁Cu₆₂ ; Au₉₁₇Cu₈₃ ; et Au₉₁₇Ag₅₅Cu₂₈.
